(19) Europäisches Patentamt / European Patent Office / Office européen des brevets

(11) **EP 3 720 161 B1**

(12) **EUROPEAN PATENT SPECIFICATION**

(45) Date of publication and mention
of the grant of the patent:
**07.08.2024 Bulletin 2024/32**

(21) Application number: **18905333.3**

(22) Date of filing: **07.02.2018**

(51) International Patent Classification (IPC):
*H04W 8/26* (2009.01)      *H04W 72/00* (2023.01)
*H04W 72/12* (2023.01)     *H04L 1/00* (2006.01)
*H04L 5/00* (2006.01)

(52) Cooperative Patent Classification (CPC):
**H04W 8/26; H04L 1/0061; H04L 1/0067;
H04L 5/0044; H04L 5/0091**

(86) International application number:
**PCT/CN2018/075632**

(87) International publication number:
**WO 2019/153142 (15.08.2019 Gazette 2019/33)**

(54) **CHANNEL TRANSMISSION METHODS AND APPARATUSES**

VERFAHREN UND VORRICHTUNGEN ZUR KANALÜBERTRAGUNG

PROCÉDÉS ET APPAREILS DE TRANSMISSION DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.10.2020 Bulletin 2020/41**

(73) Proprietor: HUAWEI TECHNOLOGIES CO., LTD.
**Shenzhen, Guangdong 518129 (CN)**

(72) Inventors:
• **ZHU, Xiaosong**
  **Shenzhen, Guangdong 518129 (CN)**
• **WU, Yiling**
  **Shenzhen, Guangdong 518129 (CN)**

(74) Representative: **Gill Jennings & Every LLP
The Broadgate Tower
20 Primrose Street
London EC2A 2ES (GB)**

(56) References cited:
WO-A1-2016/167828      CN-A- 101 715 237
CN-A- 101 909 360      CN-A- 106 538 006
US-B2- 9 161 212

• **SAMSUNG: "Procedure for UL Transmissions without Grant", vol. RAN WG1, no. Nagoya, Japan; 20170918 - 20170921, 17 September 2017 (2017-09-17), XP051339472, Retrieved from the Internet <URL:http://www.3gpp.org/ftp/Meetings_3GPP_SYNC/RAN1/Docs/> [retrieved on 20170917]**
• **HUAWEI ET AL: "Further discussion on the modelling of grant-free", vol. RAN WG2, no. Prague, Czech Republic; 20171009 - 20171013, 13 October 2017 (2017-10-13), XP051355977, Retrieved from the Internet <URL:http://www.3gpp.org/ftp/tsg_ran/WG2_RL 2/TSGR2_99bis/Docs/> [retrieved on 20171013]**
• **INTEL CORPORATION: "On data scrambling in NR", vol. RAN WG1, no. Prague, P. R. Czechia; 20170821 - 20170825, 20 August 2017 (2017-08-20), XP051316873, Retrieved from the Internet <URL:http://www.3gpp.org/ftp/Meetings_3GPP_SYNC/RAN1/Docs/> [retrieved on 20170820]**

**Description**

**TECHNICAL FIELD**

This application relates to the field of communications technologies, and in particular, to channel transmission methods and apparatuses.

**BACKGROUND**

An Internet of Things (internet of things, IoT) system performs channel transmission by loading to-be-transmitted data onto a subcarrier. There are two channel transmission manners: a scheduling manner and a non-scheduling manner.

In non-scheduling-based uplink channel transmission, a terminal device and a base station pre-agree on agreement information such as a physical uplink shared channel (physical uplink shared channel, PUSCH) carrier (carrier) index (index) and a modulation and coding scheme (Modulation and Coding Scheme, MCS) index, or the base station allocates, to the terminal device in a process in which the terminal device accesses the base station, the agreement information such as the PUSCH carrier index and the MCS index, and notifies the terminal device. Instead of needing the base station to send downlink control information (downlink control information, DCI) indication information for uplink grant, the terminal device sends, when data needs to be sent, uplink data to the base station on a PUSCH corresponding to the PUSCH carrier index based on the agreement information. The base station receives the uplink data on the PUSCH corresponding to the PUSCH carrier index based on the agreement information. In an uplink channel transmission process, the terminal device usually scrambles the uplink data by using a cell radio network temporary identifier (cell radio network temporary identifier, C-RNTI) of the terminal device. However, in the non-scheduling-based uplink channel transmission, if a plurality of terminal devices are configured on a same PUSCH channel, when receiving the uplink data on the PUSCH, the base station does not know which terminal device sends the uplink data and cannot learn of a scrambling parameter of the uplink data. Therefore, when descrambling the uplink data, the base station performs blind detection by using C-RNTIs of all the terminal devices configured on the PUSCH. Consequently, complexity is relatively high when the base station descrambles the uplink data.

SAMSUNG, "Procedure for UL Transmissions without Grant", vol. RAN WG1, no. Nagoya, Japan; 20170918 - 20170921, (20170917), 3GPP DRAFT; R1-1716013, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, relates to grant free UL transmission procedures.

HUAWEI ET AL, "Further discussion on the modelling of grant-free", vol. RAN WG2, no. Prague, Czech Republic; 20171009 - 20171013, (20171013), 3GPP DRAFT; R2-1711962, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG2_RL2/TSGR2_99bis/Docs/, modelling of grant-free transmission.

**SUMMARY**

Implementations of this application provide a channel transmission method and an apparatus, to resolve a problem of relatively high complexity of uplink data descrambling performed by a base station in the prior art.

The invention has been defined in the independent claims. Further specific technical features have been defined in the dependent claims.

According to a first aspect, this application provides a channel transmission method, and the method includes: scrambling, by a terminal device in a non-scheduling transmission mode, to-be-sent data by using a first radio network temporary identifier RNTI, where a correspondence exists between the first RNTI and a specified frequency domain resource index; or scrambling, by the terminal device in a scheduling transmission mode, the to-be-sent data by using a second RNTI, where the second RNTI is different from the first RNTI. In the foregoing design, when using the non-scheduling transmission mode, when using the non-scheduling transmission mode, the terminal device determines the first RNTI based on the specified frequency domain resource index, and then performs scrambling by using the first RNTI. The base station determines the first RNTI based on the specified frequency domain resource index, and then perform descrambling by using the first RNTI without performing the descrambling in a blind detection manner. Therefore, complexity of the descrambling may be effectively reduced.

Further, in this aspect, the terminal device determines the first RNTI based on the specified frequency domain resource index. In the foregoing design, the first RNTI is determined based on the specified frequency domain resource index. Compared with the prior art in which a scrambling parameter is a C-RNTI corresponding to the terminal device, the scrambling is performed by using the RNTI determined based on the frequency domain resource index, so that the base station determines, based on a frequency domain resource that receives data, a scrambling parameter of the data. Therefore, the complexity of the descrambling may be effectively reduced.

In a possible design, the terminal device may perform a modulo operation on the specified frequency domain resource index and the preset value, to obtain the first RNTI. In the foregoing design, the base station may determine the scrambling parameter of the received data based on the preset value and a frequency domain resource index of the frequency domain resource that receives the data, so that the received data may be descrambled based on the determined scrambling parameter. In this way, the blind detection manner may be avoided, and the complexity of the descrambling may be effectively reduced.

In a possible design, when scrambling the to-be-sent data by using the first RNTI, the terminal device may perform cyclic redundancy check CRC coding on the to-be-sent data, to obtain check coded data, perform redundancy information expansion processing on the check coded data, to obtain error-correction coded data, perform rate matching on the error-correction coded data, to obtain rate-matched data, determine a pseudo-random sequence based on the first RNTI, and scramble the rate-matched data by using the pseudo-random sequence. Compared with the prior art in which the pseudo-random sequence is determined based on the C-RNTI of the terminal device, in the foregoing design, the pseudo-random sequence is determined based on the first RNTI, so that the base station may not care about the C-RNTI of the terminal device that sends data. Therefore, data does not need to be descrambled in the blind detection manner, and the complexity of the descrambling may be effectively reduced.

In a possible design, when scrambling the to-be-sent data by using the first RNTI, the terminal device may perform cyclic redundancy check CRC coding on the to-be-sent data, to obtain check coded data, and then scramble a check bit of the check coded data by using the first RNTI. In the foregoing design, an objective of interference randomization may be achieved by scrambling a CRC by using the first RNTI, so that inter-channel interference may be reduced.

In a possible design, when scrambling the to-be-sent data by using the first RNTI, the terminal device may perform cyclic redundancy check CRC coding on the to-be-sent data, to obtain check coded data, scramble a check bit of the check coded data by using the first RNTI, to obtain scrambled check coded data, perform redundancy information expansion processing on the scrambled check coded data, to obtain error-correction coded data, perform rate matching on the error-correction coded data, to obtain rate-matched data, determine a pseudo-random sequence based on the first RNTI, and scramble the rate-matched data by using the pseudo-random sequence. In the foregoing design, on one hand, the to-be-sent data is scrambled by using the first RNTI unrelated to an identity of the terminal device, so that the base station may determine a scrambling parameter without using the blind detection manner, and the complexity of the descrambling may be effectively reduced. On the other hand, the CRC is scrambled by using the first RNTI, and the pseudo-random sequence is determined based on the first RNTI, so that the objective of the interference randomization may be achieved, thereby reducing the inter-channel interference.

In a possible design, when scrambling the check bit of the check coded data by using the first RNTI, the terminal device performs an exclusive OR operation on the first RNTI and the check bit of the check coded data. In the foregoing design, the interference randomization may be implemented by performing an exclusive OR operation on the first RNTI and the CRC, so that the inter-channel interference may be reduced.

According to a second aspect, this application provides a channel transmission method, and the method includes: receiving, by a base station, data sent by a terminal device; and in a non-scheduling transmission mode, descrambling, by the base station, the data by using a first RNTI, where a correspondence exists between the first RNTI and a specified frequency domain resource index; or in a scheduling transmission mode, descrambling, by the base station, the data by using a second RNTI, where the second RNTI is different from the first RNTI. In the foregoing design, when the terminal device uses the non-scheduling transmission mode, after receiving the data, the base station descrambles the received data based on an RNTI corresponding to the specified frequency domain resource index. Compared with that the base station descrambles the data in a blind detection manner, the foregoing design may effectively reduce complexity of descrambling.

Further, in this aspect, the base station determines the first RNTI based on the specified frequency domain resource index. Compared with the prior art in which a scrambling parameter is a C-RNTI corresponding to the terminal device, in the foregoing design, because the first RNTI is determined based on the frequency domain resource index, the base station determines, based on a frequency domain resource that receives data, a scrambling parameter of the data, so that the complexity of the descrambling may be effectively reduced.

In a possible design, when determining the first RNTI based on the specified frequency domain resource index, the base station may perform a modulo operation on the specified frequency domain resource index and the preset value, to obtain the first RNTI. In the foregoing design, the base station may determine the scrambling parameter of the received data based on the preset value and a frequency domain resource index of the frequency domain resource that receives the data, so that the received data may be descrambled based on the determined scrambling parameter. In this way, the blind detection manner may be avoided, and the complexity of the descrambling may be effectively reduced.

In a possible design, when descrambling the data by using the first RNTI, the base station may determine a pseudo-random sequence based on the first RNTI, and then descramble the data by using the pseudo-random sequence. Compared with the prior art in which the pseudo-random sequence is determined based on the C-RNTI of the terminal device, in the foregoing design, the pseudo-random sequence is determined based on the first RNTI, so that the base station may not care about the C-RNTI of the terminal device that sends data. Therefore, data does not need to be descrambled in the blind detection manner, and the complexity of the descrambling may be effectively reduced.

In a possible design, when descrambling the data by using the first RNTI, the base station may descramble the data, to obtain descrambled data, perform inverse processing of rate matching on the descrambled data, to obtain data that exists before the rate matching, perform de-redundancy processing on the data that exists before the rate matching, to obtain de-redundant data, descramble a check bit of the de-redundant data by using the first RNTI, to obtain check coded data, and perform inverse processing of cyclic redundancy check CRC coding on the check coded data. In the foregoing design, an objective of interference randomization may be achieved by the terminal device by scrambling a CRC by using the first RNTI, so that inter-channel interference may be reduced.

In a possible design, when descrambling the data by using the first RNTI, the base station may determine a pseudo-random sequence based on the first RNTI, descramble the data by using the pseudo-random sequence, to obtain descrambled data, perform inverse processing of rate matching on the descrambled data, to obtain data that exists before the rate matching, perform de-redundancy processing on the data that exists before the rate matching, to obtain de-redundant data, descramble a check bit of the de-redundant data by using the first RNTI, to obtain check coded data, and perform inverse processing of cyclic redundancy check CRC coding on the de-redundant data by using the check coded data. In the foregoing design, on one hand, the to-be-sent data is scrambled by using the first RNTI unrelated to an identity of the terminal device, so that the base station may determine a scrambling parameter without using the blind detection manner, and the complexity of the descrambling may be effectively reduced. On the other hand, the CRC is scrambled by using the first RNTI, and the pseudo-random sequence is determined based on the first RNTI, so that the objective of the interference randomization may be achieved, thereby reducing the inter-channel interference.

In a possible design, when descrambling the check bit of the de-redundant data by using the first RNTI, the base station may perform an exclusive OR operation on the first RNTI and the check bit of the de-redundant data. In the foregoing design, the interference randomization may be implemented by performing an exclusive OR operation on the first RNTI and the CRC, so that the inter-channel interference may be reduced.

## BRIEF DESCRIPTION OF DRAWINGS

FIG. 1 is a schematic architectural diagram of an IoT system according to an implementation of this application;
FIG. 2 is a schematic flowchart of a modulation and coding method according to an implementation of this application;
FIG. 3 is a schematic flowchart of a channel transmission method according to an implementation of this application;
FIG. 4 is a schematic structural diagram of a MAC packet assembly according to an implementation of this application;
FIG. 5 is a schematic flowchart of demodulation and decoding according to an implementation of this application;
FIG. 6 is a schematic structural diagram of a terminal device according to an implementation of this application;
FIG. 7 is a schematic structural diagram of a terminal device according to an implementation of this application;
FIG. 8 is a schematic structural diagram of a base station according to an implementation of this application; and
FIG. 9 is a schematic structural diagram of a base station according to an implementation of this application.

## DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The network architecture and the service scenario described in the implementations of this application are intended to describe the technical solutions in the implementations of this application more clearly, and do not constitute a limitation on the technical solutions provided in the implementations of this application. Persons of ordinary skill in the art may know that: With the evolution of the network architecture and the emergence of new service scenarios, the technical solutions provided in the implementations of this application are also applicable to similar technical problems.

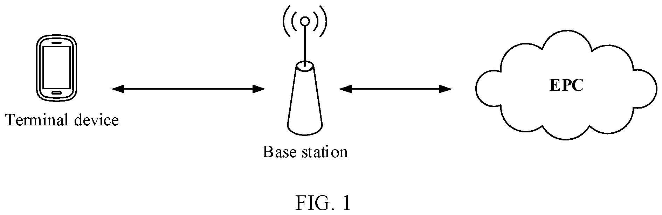

A channel transmission method provided in this application may be applied to an Internet of Things (internet of things, IoT) system, and a bandwidth of a channel in the IoT system may be 25 kHz. As shown in FIG. 1, an architecture of the IoT system includes a terminal device, a base station, and a core network (evolved packet core, EPC). Uplink channel transmission and downlink channel transmission are performed between the base station and the terminal device.

The base station in the IoT system may be a common base station (for example, a Node B or an eNB), a new radio controller (new radio controller, NR controller), a gNodeB (gNB) in a 5G system, a centralized network element (centralized unit), a new radio base station, a radio remote module, a micro base station, a relay (relay), a distributed network element (distributed unit), a transmission reception point (transmission reception point, TRP), a transmission point (transmission point, TP), or any other radio access device. However, this is not limited in the implementations of this application.

The terminal device is also referred to as user equipment (User Equipment, UE), and is a device, for example, a handheld device or a vehicle-mounted device having a wireless connection function, providing voice and/or data connectivity for the terminal device. A common terminal includes, for example, a mobile phone, a tablet, a notebook computer, a palmtop computer, a mobile Internet device (mobile internet device, MID), and a wearable device such as a smartwatch, a smart band, or a pedometer.

In the IoT system, channel transmission may be performed between the base station and the terminal device in a non-scheduling-based manner, or data transmission may be performed in a scheduling grant-based manner. In non-scheduling-based uplink channel transmission, the terminal device and the base station pre-agree on agreement information such as a physical uplink shared channel (physical uplink shared channel, PUSCH) carrier (carrier) index (index), a modulation and coding scheme (modulation and coding scheme, MCS) index, a period (period), a starting position (offset), and duration (duration), or the base station allocates, to the terminal device in a process in which the terminal device accesses the base station, agreement information such as a PUSCH carrier index, an MCS index, a period, an offset, and duration, and notifies the terminal device. Instead of needing the base station to send downlink control information (downlink control information, DCI) indication information for uplink grant, the terminal device sends, when data needs to be sent, uplink data to the base station on a PUSCH corresponding to the PUSCH carrier index based on the agreement information. The base station receives the uplink data on the PUSCH corresponding to the PUSCH carrier index based on a modulation and coding scheme corresponding to the MCS index. The base station receives the uplink data on the PUSCH corresponding to the PUSCH carrier index based on the agreement information.

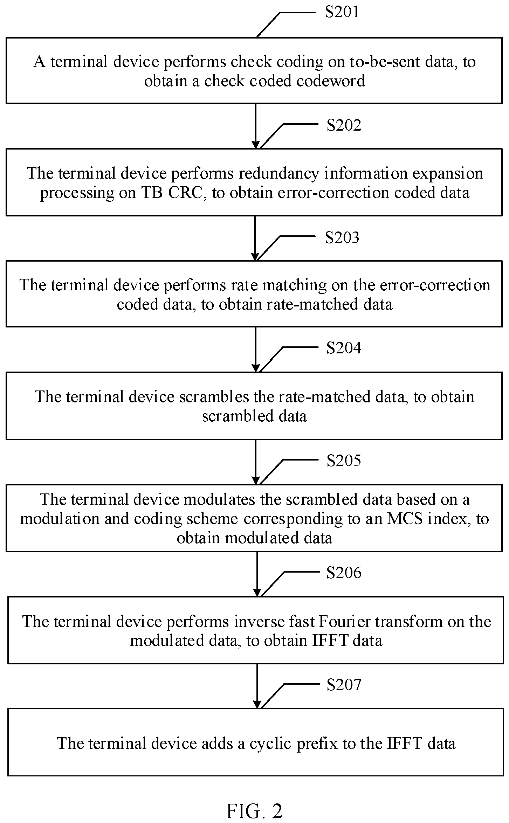

Before sending the data, the terminal device performs coding and modulation processing on to-be-sent data, as shown in FIG. 2.

S201: The terminal device performs check coding on the to-be-sent data, to obtain a check coded codeword (transport block cyclic redundancy check, TB CRC).

Specifically, the terminal device adds cyclic redundancy check (cyclic redundancy check, CRC) code to the end of the to-be-sent data, to obtain the TB CRC.

S202: The terminal device performs redundancy information expansion processing on the TB CRC, to obtain error-correction coded data.

The redundancy information expansion processing may be tail-biting convolutional coding.

S203: The terminal device performs rate matching on the error-correction coded data, to obtain rate-matched data.

S204: The terminal device scrambles the rate-matched data, to obtain scrambled data.

Specifically, the terminal device determines a pseudo-random sequence by using a cell radio network temporary identifier (cell radio network temporary identifier, C-RNTI) of the terminal device, and scrambles the rate-matched data by using the pseudo-random sequence.

The pseudo-random sequence may meet the following formula:

$$c_{\text{init}} = n_{\text{RNTI}} \cdot \text{a} + n_f \cdot b + n_s \cdot \text{c} + N_{\text{ID}}^{\text{Ncell}} + d \; .$$

$c_{\text{init}}$ is the pseudo-random sequence, $n_{\text{RNTI}}$ is the C-RNTI of the terminal device, $n_f$ is a frame number, $n_s$ is a slot number, and $N_{\text{ID}}^{\text{Ncell}}$ is a cell identifier number, where a, b, c, and d are integers.

The to-be-sent data may meet the following formula:

$$b' = (b + c_{\text{init}}) \bmod 2 \; .$$

$b'$ is the to-be-sent data, $b$ is the rate-matched data, and $c_{\text{init}}$ is the pseudo-random sequence.

S205: The terminal device modulates the scrambled data based on the modulation and coding scheme corresponding to the MCS index, to obtain modulated data.

S206: The terminal device performs inverse fast Fourier transform (inverse fast fourier transform, IFFT) on the modulated data, to obtain IFFT data.

S207: The terminal device adds a cyclic prefix (cyclic prefix, CP) to the IFFT data.

In the IoT system, a range corresponding to a radio network temporary identifier (radio network temporary identifier, RNTI) may be 0000 to FFFF (hexadecimal). Specifically, range distribution corresponding to different RNTIs is shown in Table 1.

**Table 1**

| Value (Value) | RNTI |
|---|---|
| 0000 | Null (N/A) |
| 0001 to 0960 | Random access RNTI (random access RNTI, RA-RNTI), C-RNTI, temporary (Temporary) C-RNTI, PUCCH uplink power control identifier (TPC-PUCCH-RNTI), and PUSCH uplink power control identifier (TPC-PUSCH-RNTI) |
| 0961 to FFF3 | C-RNTI, temporary C-RNTI, TPC-PUCCH-RNTI, and TPC-PUSCH-RNTI |
| FFF4 to FFF9 | Reserved for future use (Reserved for future use) |
| FFFE | Paging RNTI (paging RNTI, P-RNTI) |
| FFFF | System message RNTI (system information RNTI, SI-RNTI) |

In the non-scheduling-based uplink channel transmission, if a plurality of terminal devices are configured on a same PUSCH channel, the terminal devices separately scramble data by using respective C-RNTIs during data transmission. In this case, when receiving the uplink data on the PUSCH, the base station does not know which terminal device sends the uplink data and cannot learn of a scrambling parameter of the uplink data. Therefore, when descrambling the uplink data, the base station needs to perform blind detection by using C-RNTIs of all the terminal devices configured on the PUSCH. Consequently, complexity is relatively high when the base station descrambles the uplink data.

To resolve this problem, this application provides a channel transmission method and an apparatus, and the channel transmission method and the apparatus may be applied to the IoT system shown in FIG. 1. The method and the apparatus are conceived based on a same inventive concept. Because the method and the apparatus have similar principles for resolving problems, for implementation of the apparatus and the method, refer to each other, and details of repeated parts are not described.

In the following, some terms in this application are described, to help persons skilled in the art have a better understanding.

A unit frequency domain resource is a channel, a subcarrier, data, or the like in the IoT system.

Exclusive OR operation: A mathematical symbol of the exclusive OR operation is "$\oplus$", and $X \oplus Y = 0$ or 1. If X and Y are two different values, a result of the exclusive OR operation is 1. If X and Y are two same values, a result of the exclusive OR operation is 0. In this case, an exclusive OR operation algorithm in binary is: $0 \oplus 0 = 0$, $1 \oplus 0 = 1$, $0 \oplus 1 = 1$, and $1 \oplus 1 = 0$.

"Multiple" refers to two or more than two.

In addition, it should be understood that in descriptions of this application, terms such as "first" and "second" are merely intended for purposes of description, and should not be understood as an indication or implication of relative importance, and cannot be understood as an indication or implication of a sequence.

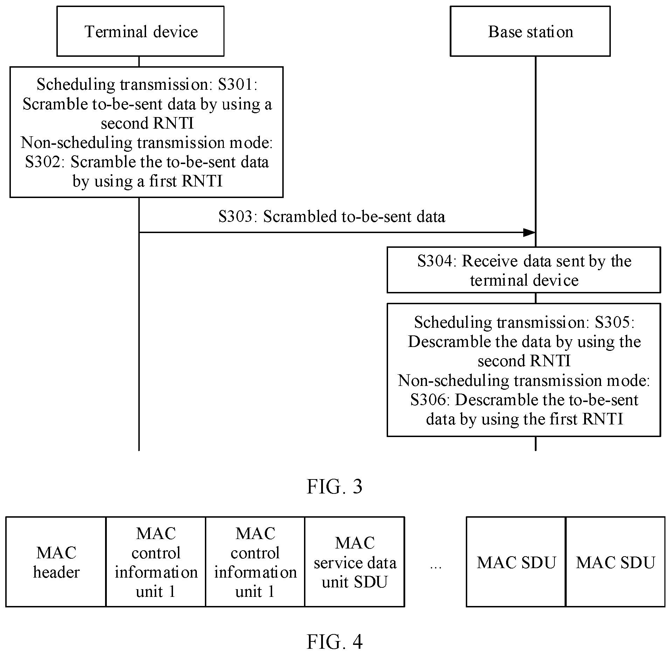

FIG. 3 is a flowchart of a channel transmission method according to this application. The method may be applied to the communications system shown in FIG. 1, and the method includes the following steps.

In the following description, the implementations in which a first RNTI is a preset value are not claimed as such and these implementations are illustrative examples that are helpful for understanding the claimed invention.

In a scheduling transmission mode, S301: A terminal device scrambles to-be-sent data by using a second RNTI. The second RNTI may be a C-RNTI of the terminal device. Specifically, if the transmission mode is scheduling transmission, the terminal device sends a scheduling request (scheduling request, SR) to a base station when the terminal device needs to send data to the base station. Therefore, after receiving the SR, the base station allocates, to the terminal device, a resource used to transmit uplink data, and notifies the terminal device by using DCI information including an uplink scheduling grant, that is, indicates, by using the DCI information, information such as a frequency domain resource that can be used by the terminal device to transmit data. The terminal device may scramble the to-be-sent data by using the C-RNTI of the terminal device, and then send the to-be-sent data by using the frequency domain resource indicated by the DCI information.

In the non-scheduling transmission mode, S302: The terminal device scrambles the to-be-sent data by using a first RNTI. The first RNTI may be a preset value. According to the claimed invention, a correspondence exists between the first RNTI and a specified frequency domain resource index. The specified frequency domain resource index is an index corresponding to the frequency domain resource that is allocated by the base station to the terminal device when the terminal device is accessed and that is used for uplink transmission. In the non-scheduling-based transmission mode, the terminal device may directly perform transmission on the specified frequency domain resource index when the terminal device needs to send data to the base station, and the base station does not need to send uplink scheduling DCI information. Alternatively, the specified frequency domain resource index may be predetermined by the terminal device and the base station.

In this implementation of this application, when using the non-scheduling transmission mode, the terminal device may scramble the to-be-sent data by using the preset value, and the base station may perform descrambling by using the preset value without performing the descrambling in a blind detection manner. Therefore, complexity of the descrambling may be effectively reduced.

According to the claimed invention, when using the non-scheduling transmission mode, the terminal device may further determine the first RNTI based on the specified frequency domain resource index, and then perform scrambling by using the first RNTI. The base station may determine the first RNTI based on the specified frequency domain resource index, and then perform descrambling by using the first RNTI without performing the descrambling in a blind detection manner. Therefore, complexity of the descrambling may be effectively reduced.

The first RNTI mentioned in this implementation of this application may be an RNTI of the frequency domain resource. For ease of description, the RNTI of the frequency domain resource may be referred to as a GL-RNTI in this implementation of this application. The following describes in detail a process in which uplink transmission is performed between the terminal device and the base station in the non-scheduling transmission mode.

If the first RNTI is a preset value, the terminal device may determine the first RNTI in either of the following two manners:

Manner 1: The base station may notify the terminal device of a mapping relationship between a PUSCH index of the frequency domain resource and the GL-RNTI by using a system message, so that the terminal device determines, based on the PUSCH index of the specified frequency domain resource, a corresponding GL-RNTI as the first RNTI.

In this implementation of this application, some values from 0000 to FFFF in a hexadecimal value table may be selected as GL-RNTIs. For example, 0001 to 01E0 may be used as GL-RNTIs, and range distribution corresponding to different RNTIs is shown in Table 2.

**Table 2**

| Value (Value) | RNTI |
|---|---|
| 0000 | N/A |
| 0001 to 01E0 | GL-RNTI |
| 01E1 to 0960 | RA-RNTI, C-RNTI, temporary C-RNTI, TPC-PUCCH-RNTI, and TPC-PUSCH-RNTI |
| 0961 to FFF3 | C-RNTI, temporary C-RNTI, TPC-PUCCH-RNTI, and TPC-PUSCH-RNTI |
| FFF4 to FFF9 | Reserved for future use |
| FFFE | P-RNTI |
| FFFF | SI-RNTI |

Alternatively, FE13 to FFF3 may be used as GL-RNTIs, and range distribution corresponding to different RNTIs is shown in Table 3.

**Table 3**

| Value (Value) | RNTI |
|---|---|
| 0000 | N/A |
| 01E1 to 0960 | RA-RNTI, C-RNTI, temporary C-RNTI, TPC-PUCCH-RNTI, and TPC-PUSCH-RNTI |
| 0961 to FE12 | C-RNTI, temporary C-RNTI, TPC-PUCCH-RNTI, and TPC-PUSCH-RNTI |
| FE13 to FFF9 | GL-RNTI |
| FFF4 to FFF9 | Reserved for future use |
| FFFE | P-RNTI |
| FFFF | SI-RNTI |

Certainly, another value may be selected as the GL-RNTI. This is not specifically limited in this implementation of this application.

Manner 2: The terminal device and the base station pre-agree on a value as the first RNTI, so that the terminal device performs scrambling in the non-scheduling-based transmission mode by using the value.

If the correspondence exists between the first RNTI and the specified frequency domain resource index, the terminal device may determine the first RNTI based on the PUSCH index of the specified frequency domain resource.

Specifically, the terminal device may perform a modulo operation on the PUSCH index of the specified frequency domain resource and the preset value, where the preset value may be pre-agreed on by the terminal device and the base station. For ease of description, the preset value may be referred to as a GL-RNTI number. The GL-RNTI may meet the following formula:

$$\text{GL-RNTI=mod (PUSCH carrier index, GL-RNTI number)}.$$

For example, if the GL-RNTI number is 480, and the PUSCH index of the specified frequency domain resource is 170, the GL-RNTI is 170.

Before sending the uplink data to the base station, the terminal device may perform coding and modulation on the to-be-sent data by performing steps S201 to S207. When scrambling the to-be-sent data by using the first RNTI, the terminal device may implement scrambling in any one of the following three scrambling manners:

First scrambling manner: The terminal device uses the first RNTI in a process of performing check coding on the to-be-sent data to obtain the TB CRC in step S201.

In a first implementation, the terminal device may perform cyclic redundancy check CRC coding on the to-be-sent data, to obtain check coded data, and then scramble a check bit of the check coded data by using the first RNTI.

Specifically, when scrambling the check bit of the check coded data by using the first RNTI, the terminal device may perform an exclusive OR operation on the first RNTI and the check bit of the check coded data. That is,

$$A=B \oplus C.$$

A is scrambled check coded data, B is a binary sequence of the first RNTI, and C is the check bit of the check coded data. For ease of description, the check bit of the check coded data may be referred to as a TB CRC check bit.

When a quantity m of bits of the TB CRC check bit is greater than a quantity n of bits of the binary sequence of the first RNTI, the terminal device may perform an exclusive OR operation bit by bit on an n-bit sequence in the TB CRC check bit and the binary sequence of the first RNTI, where a location of the n-bit sequence may be pre-agreed on by the terminal device and the base station, or the location of the n-bit sequence may be specified by the base station in a process in which the terminal device accesses the base station. For example, the location of the n-bit sequence may be locations of first n bits in the TB CRC check bit, or may be locations of last n bits in the TB CRC check bit. Alternatively, (m-n) zeros may be added before the binary sequence of the first RNTI, and then an exclusive OR operation is performed on the zero-added binary sequence of the first RNTI and the TB CRC check bit. For example, if m is 10, the TB CRC check bit is 0101010001, n is 6, and the binary sequence of the first RNTI is 110010, four zeros are added before the binary sequence of the first RNTI, and the zero-added binary sequence of the first RNTI is 0000110010.

For example, if m is 24, n is 16, the TB CRC check bit is 010100101110101001010101, and the first RNTI is 00E0, the binary sequence of the first RNTI is 0000000011100000.

If the location of the n-bit sequence is the locations of the first n bits in the TB CRC check bit, an exclusive OR operation performed on the first RNTI and the TB CRC check bit is:

$$(0101001011101010) \oplus (0000000011100000) = (0101001000001010).$$

If the location of the n-bit sequence is the locations of the last n bits in the TB CRC check bit, an exclusive OR operation performed on the first RNTI and the TB CRC check bit is:

$$(1110101001010101) \oplus (0000000011100000) = (1110101010110101).$$

If eight zeros are added before the binary sequence of the first RNTI, the zero-added binary sequence of the first RNTI is 000000000000000011100000. An exclusive OR operation performed on the first RNTI and the TB CRC check bit is:

$$(010100101110101001010101) \oplus (000000000000000011100000) = (010100\ 101110101010110101).$$

When a quantity m of bits of the TB CRC check bit is less than a quantity n of bits of the binary sequence of the first RNTI, the terminal device may perform an exclusive OR operation bit by bit on the TB CRC check bit and an m-bit sequence in the binary sequence of the first RNTI, where a location of the m-bit sequence may be pre-agreed on by the terminal device and the base station, or the location of the m-bit sequence may be specified by the base station in a process in which the terminal device accesses the base station. For example, the location of the m-bit sequence may be locations of first m bits in the binary sequence of the first RNTI, or may be locations of last m bits in the binary sequence of the first RNTI.

For example, if m is 12, n is 16, the TB CRC check bit is 101001010101, and the first RNTI is 00E0, the binary sequence of the first RNTI is 0000000011100000.

If the location of the m-bit sequence is the locations of the first m bits in the binary sequence of the first RNTI, an exclusive OR operation performed on the first RNTI and the TB CRC check bit is:

$$(101001010101) \oplus (000000001110) = (101001011011).$$

If the location of the m-bit sequence is the locations of the last m bits in the binary sequence of the first RNTI, an exclusive OR operation performed on the first RNTI and the TB CRC check bit is:

$$(101001010101) \oplus (000011100000) = (101010110101).$$

In a second implementation, the terminal device may perform cyclic redundancy check CRC coding on the to-be-sent data, to obtain the TB CRC, and then scramble the TB CRC by using the first RNTI, to obtain scrambled TB CRC.

Specifically, when scrambling the TB CRC by using the first RNTI, the terminal device may perform an exclusive OR operation on the first RNTI and the TB CRC check bit. For details herein, refer to the exclusive OR operation method in the first implementation. Details are not described herein again in this implementation of this application.

Second scrambling manner: When performing step S205 to scramble the rate-matched data to obtain the to-be-sent data, the terminal device scrambles the rate-matched data by using the first RNTI.

Specifically, the terminal device may determine a pseudo-random sequence based on the first RNTI, and then scramble the rate-matched data by using the pseudo-random sequence, to obtain scrambled data. The pseudo-random sequence may meet the following formula requirement:

$$c_{\text{init}} = n_{\text{RNTI}} \cdot a_1 + n_f \cdot b_1 + n_s \cdot c_1 + N_{\text{ID}}^{\text{Ncell}} + d_1.$$

$c_{\text{init}}$ is the pseudo-random sequence, $n_{\text{RNTI}}$ is the first RNTI, $n_f$ is a frame number, $n_s$ is a slot number, $N_{\text{ID}}^{\text{Ncell}}$ is a cell identifier number, where $a_1$, $b_1$, $c_1$, and $d_1$ are integers.

The scrambled data may meet the following formula:

$$b' = (b + c_{\text{init}}) \bmod 2.$$

$b'$ is the scrambled data, $b$ is the rate-matched data, and $c_{\text{init}}$ is the pseudo-random sequence.

Third scrambling manner: The terminal device uses the first RNTI in a process of performing check coding on the to-be-sent data to obtain the TB CRC in step S201. In addition, when performing step S205 to scramble the rate-matched data, the terminal device scrambles the rate-matched data by using the first RNTI.

For a method of using the first RNTI by the terminal device in the process of performing the check coding on the to-be-sent data to obtain the TB CRC, refer to the first scrambling manner. For a method of scrambling the rate-matched data by the terminal device by using the first RNTI, refer to the second scrambling manner. Details are not described herein again in this implementation of this application.

In this implementation of this application, the terminal device may scramble the to-be-sent data by using the preset value or the RNTI corresponding to the PUSCH index, and then send the to-be-sent data on the frequency domain resource corresponding to the PUSCH index. After receiving the data on the frequency domain resource corresponding to the PUSCH index, the base station may descramble the received data by using the preset value or the RNTI corresponding to the PUSCH index. However, if a plurality of terminal devices are configured on a same frequency domain resource, after receiving the data on the frequency domain resource, the base station still does not know which terminal device sends the data. In this case, after performing coding and modulation on the to-be-sent data, before sending the to-be-sent data, and when adding a MAC header to the scrambled data by using a media access control (media access control, MAC) sublayer protocol layer, the terminal device may add the C-RNTI of the terminal device to the MAC header corresponding to the data at the MAC layer. For a format of a MAC packet assembly, refer to FIG. 4.

After scrambling the to-be-sent data in step S301 or S302, the terminal device performs step S303.

S303: The terminal device sends the scrambled to-be-sent data. Step S304 is performed.

Specifically, when the transmission mode corresponding to the transmission mode identifier is the non-scheduling transmission, the terminal device may send the scrambled to-be-sent data on the frequency domain resource corresponding to the PUSCH index.

When the transmission mode corresponding to the transmission mode identifier is the scheduling transmission, the terminal device may send the scrambled to-be-sent data based on DCI indication including an uplink scheduling grant of the base station.

S304: The base station receives the data sent by the terminal device. In the scheduling transmission mode, step S305 is performed. In the non-scheduling transmission mode, step S306 is performed.

S305: The base station descrambles the data by using the second RNTI. The second RNTI may be the C-RNTI of the terminal device.

S306: The base station descrambles the received data by using the first RNTI. The first RNTI is the preset value, or the correspondence exists between the first RNTI and the specified frequency domain resource index.

If the first RNTI is the preset value, the base station may determine the first RNTI in either of the following two manners:

Manner 1: The base station may record a mapping relationship between the frequency domain resource and the GL-RNTI, use the system message to notify the terminal device of the mapping relationship between the frequency domain resource and the GL-RNTI, and then allocate the frequency domain resource to the terminal device in a process in which the terminal device accesses the base station. The base station determines that the GL-RNTI corresponding to the allocated frequency domain resource is the first RNTI.

Manner 2: The terminal device and the base station pre-agree on a value as the first RNTI, so that the base station performs descrambling by using the value when receiving the data that is based on the non-scheduling transmission.

If the correspondence exists between the first RNTI and the PUSCH index of the specified frequency domain resource, the base station may determine the first RNTI based on the PUSCH index of the specified frequency domain resource.

Specifically, the base station may perform a modulo operation on the PUSCH index of the specified frequency domain resource and the GL-RNTI number, where the GL-RNTI number may be pre-agreed on by the terminal device and the base station. The first RNTI may meet the following formula:

$$GL\text{-}RNTI = \text{mod (PUSCH carrier index, GL-RNTI number)}.$$

For example, if the GL-RNTI number is 480, and the PUSCH index of the specified frequency domain resource is 170, the first RNTI is 170.

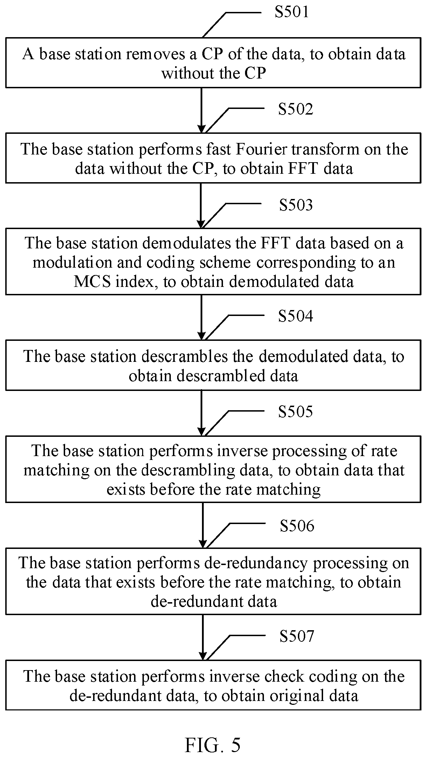

After receiving the data, the base station may perform demodulation and decoding processing on the data. For details, refer to FIG. 5.

S501: The base station removes a CP of the data, to obtain data without the CP.

S502: The base station performs fast Fourier transform (fast fourier transform, FFT) on the data without the CP, to obtain FFT data.

S503: The base station demodulates the FFT data based on a modulation and coding scheme corresponding to an MCS index, to obtain demodulated data.

S504: The base station descrambles the demodulated data, to obtain descrambled data.

S505: The base station performs inverse processing of rate matching on the descrambling data, to obtain data that exists before the rate matching.

S506: The base station performs de-redundancy processing on the data that exists before the rate matching, to obtain de-redundant data.

The de-redundancy processing may be inverse processing of tail-biting convolutional coding.

S507: The base station performs inverse check coding on the de-redundant data, to obtain original data.

Specifically, the inverse check coding may be specifically removing a CRC after the de-redundant data.

That the base station descrambles the received data by using the first RNTI may be implemented in any one of the following three descrambling manners:

First descrambling manner: When the terminal device scrambles the to-be-sent data in the first scrambling manner, the base station may use the first RNTI in a process of performing the inverse check coding in step S507.

In a first implementation, the base station may descramble a check bit of the de-redundant data by using the first RNTI, to obtain check coded data, and then perform inverse check coding on the check coded data. When descrambling the check bit of the de-redundant data by using the first RNTI, the base station may perform an exclusive OR operation on the first RNTI and the check bit of the de-redundant data. For details herein, refer to the method of performing the exclusive OR operation on the first RNTI and the CRC by the terminal device in the first scrambling manner. Details are not described herein again in this implementation of this application.

In a second implementation, the base station may descramble the de-redundant data by using the first RNTI, to obtain check coded data, and then perform inverse check coding on the check coded data. When descrambling the de-redundant data by using the first RNTI, the terminal device may perform an exclusive OR operation on the first RNTI and the de-redundant data. For details herein, refer to the method of performing the exclusive OR operation on the first RNTI and the CRC by the terminal device in the first scrambling manner. Details are not described herein again in this implementation of this application.

Second descrambling manner: When the terminal device scrambles the to-be-sent data in the second scrambling manner, when performing step S504 of descrambling the demodulated data to obtain the descrambled data, the base station may demodulate the demodulated data by using the first RNTI.

Specifically, the base station may determine a pseudo-random sequence based on the first RNTI, and then descramble the demodulated data by using the pseudo-random sequence, to obtain descrambled data. The pseudo-random sequence may meet the following formula requirement:

$$c_{\text{init}} = n_{\text{RNTI}} \cdot a_1 + n_f \cdot b_1 + n_s \cdot c_1 + N_{\text{ID}}^{\text{Ncell}} + d_1 .$$

$c_{\text{init}}$ is the pseudo-random sequence, $n_{\text{RNTI}}$ is the first RNTI, $n_f$ is a frame number, $n_s$ is a slot number, $N_{\text{ID}}^{\text{Ncell}}$ is a cell identifier number, where $a_1$, $b_1$, $c_1$, and $d_1$ are integers.

The descrambled data may meet the following formula:

$$b' = (b + c_{\text{init}}) \bmod 2 .$$

$b'$ is the demodulated data, $b$ is the descrambled data, and $c_{\text{init}}$ is the pseudo-random sequence.

Third descrambling manner: When the terminal device scrambles the to-be-sent data in the third scrambling manner, the base station may use the first RNTI in a process of performing inverse check coding in step S507; when performing step S504 of descrambling the demodulated data to obtain the descrambled data, the base station may demodulate the demodulated data by using the first RNTI.

For a method in which the base station uses the first RNTI in a process of performing the inverse check coding, refer to the first descrambling manner. For a method in which the base station descrambles the demodulated data to obtain the descrambled data, refer to the method in the second descrambling manner. Details are not described herein again in this implementation of this application.

After receiving the data, the base station may further obtain, from a MAC header of the data, a C-RNTI of the terminal device that sends the data.

In this implementation of this application, when using the non-scheduling transmission mode, the terminal device may scramble the to-be-sent data by using a preset value, and the base station may perform descrambling by using the preset value without performing the descrambling in a blind detection manner. Therefore, complexity of the descrambling may be effectively reduced.

According to the claimed invention, when using the non-scheduling transmission mode, the terminal device determines the first RNTI based on a frequency domain resource index carried in an indication message, and then performs scrambling by using the first RNTI. The base station determines the first RNTI based on the frequency domain resource index, and then performs descrambling by using the first RNTI without performing the descrambling in a blind detection manner. Therefore, complexity of the descrambling may be effectively reduced.

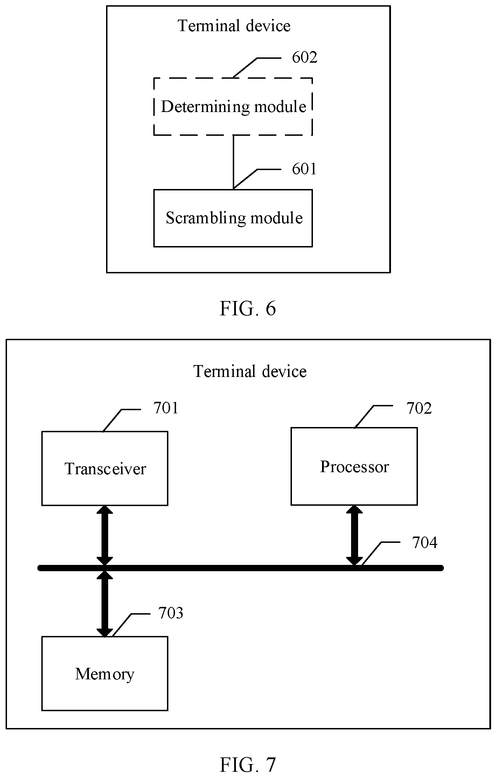

Based on a same inventive concept as the method implementation, an implementation of this application provides a terminal device, and the terminal device is specifically configured to implement the method described in the implementation in FIG. 3. A structure of the apparatus is shown in FIG. 6 and includes a scrambling module 601.

In the following description, the implementations in which a first RNTI is a preset value are not claimed as such and these implementations are illustrative examples that are helpful for understanding the claimed invention.

The scrambling module 601 is configured to: when a transmission mode corresponding to the transmission mode identifier is non-scheduling transmission, scramble to-be-sent data by using a first RNTI, where the first RNTI is a preset value, or a correspondence exists between the first RNTI and a specified frequency domain resource index; or when the transmission mode corresponding to the transmission mode identifier is scheduling transmission, scramble the to-be-sent data by using a second RNTI, where the second RNTI is different from the first RNTI.

According to the claimed invention, the terminal device include a determining module 602, configured to: when the correspondence exists between the first RNTI and the frequency domain resource index, determine the first RNTI based on the specified frequency domain resource index.

In a specific implementation, the determining module 602 may be specifically configured to perform an exclusive OR modulo operation on the specified frequency domain resource index and the preset value, to obtain the first RNTI.

Optionally, when scrambling the to-be-sent data by using the first RNTI, the scrambling module 601 may be specifically configured to: perform cyclic redundancy check CRC coding on the to-be-sent data, to obtain check coded data; perform redundancy information expansion processing on the check coded data, to obtain error-correction coded data; perform rate matching on the error-correction coded data, to obtain rate-matched data; determine a pseudo-random sequence based on the first RNTI; and scramble the rate-matched data by using the pseudo-random sequence. Alternatively, the scrambling module 601 may be specifically configured to: perform cyclic redundancy check CRC coding on the to-be-sent data, to obtain check coded data; and then scramble a check bit of the check coded data by using the first RNTI. Alternatively, the scrambling module 601 may be specifically configured to: perform cyclic redundancy check CRC coding on the to-be-sent data, to obtain check coded data; scramble a check bit of the check coded data by using the first RNTI, to obtain scrambled check coded data; perform redundancy information expansion processing on the scrambled check coded data, to obtain error-correction coded data; perform rate matching on the error-correction coded data, to obtain rate-matched data; determine a pseudo-random sequence based on the first RNTI; and scramble the rate-matched data by using the pseudo-random sequence.

In a specific implementation, when scrambling the check bit of the check coded data by using the first RNTI, the scrambling module 601 performs an exclusive OR operation on the first RNTI and the check bit of the check coded data.

In the implementations of this application, division of modules is an example, and is merely logical function division. In an actual implementation, there may be another division manner. In addition, function modules in the implementations of this application may be integrated into one processor, or each of the modules may exist alone physically, or two or more modules may be integrated into one module. The integrated module may be implemented in a form of hardware, or may be implemented in a form of a software function module.

When the integrated module is implemented in the form of hardware, as shown in FIG. 7, a terminal device may include a processor 702. Physical hardware corresponding to the foregoing module may be the processor 702. The processor 702 may be a central processing module (English: central processing unit, CPU for short), a digital processing module, or the like. The terminal device may further include a transceiver 701, and the processor 702 performs data receiving and sending with a base station by using the transceiver 701. The apparatus further includes a memory 703, configured to store a program executed by the processor 702. The memory 703 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory 703 is any other medium that can be configured to carry or store expected program code that has an instruction or a data structure form and that can be accessed by a computer, but is not limited thereto.

The processor 702 is configured to execute the program code stored in the memory 703, and is specifically configured to perform any method in the implementation shown in FIG. 3. For details, refer to the method in the implementation shown in FIG. 3. Details are not described herein again in this application.

In this implementation of this application, a specific connection medium among the foregoing transceiver 701, processor 702, and memory 703 is not limited. In this implementation of this application, the memory 703, the processor 702, and the transceiver 701 are connected to each other by using a bus 704 in FIG. 7. The bus is represented by using a thick line in FIG. 7, and a connection manner between other components is merely described as an example, and is not limited thereto. The bus may be classified into an address bus, a data bus, a control bus, and the like. For ease of representation, only one thick line is used to represent the bus in FIG. 7, but this does not mean that there is only one bus or only one type of bus.

An implementation of the present disclosure further provides a chip. The chip includes the foregoing transceiver and the foregoing processor, and is configured to support a first relay device in implementing any method in the implementation shown in FIG. 3.

An implementation of this application further provides a computer-readable storage medium, configured to store a computer software instruction that needs to be executed for executing the foregoing processor. The computer-readable storage medium includes a program that needs to be executed for executing the foregoing processor.

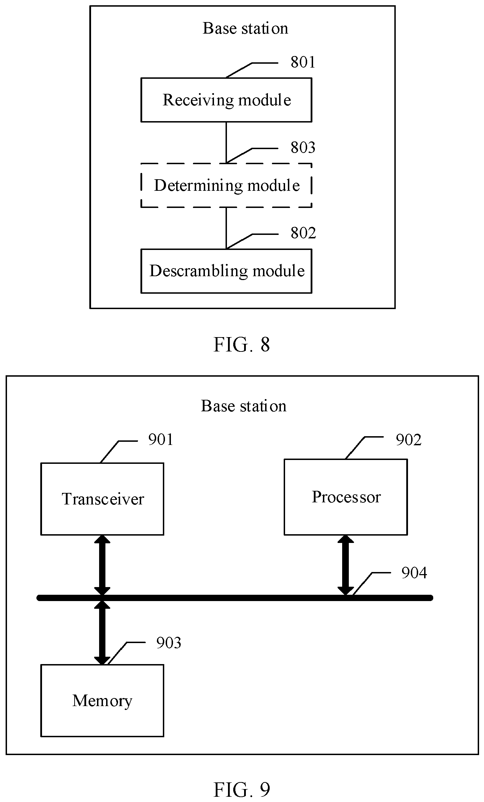

Based on a same inventive concept as the method implementation, an implementation of this application provides a base station, and the base station is specifically configured to implement the method described in the implementation in FIG. 3. A structure of the apparatus is shown in FIG. 8 and includes a receiving module 801 and a descrambling module 802.

In the following description, the implementations in which a first RNTI is a preset value are not claimed as such and these implementations are illustrative examples that are helpful for understanding the claimed invention.

The receiving module 801 is configured to receive data sent by a terminal device. The descrambling module 802 is configured to: in a non-scheduling transmission mode, descramble the data by using a first RNTI, where the first RNTI is a preset value, or a correspondence exists between the first RNTI and a specified frequency domain resource index; or in the non-scheduling transmission mode, descramble the data by using a second RNTI.

According to the claimed invention, the base station further includes a determining module 803, configured to: when the correspondence exists between the first RNTI and the specified frequency domain resource index, determine the first RNTI based on the specified frequency domain resource index.

In a specific implementation, the determining module 803 is specifically configured to perform a modulo operation on the specified frequency domain resource index and the preset value, to obtain the first RNTI.

Optionally, when descrambling the data by using the first RNTI, the descrambling module 802 may be specifically configured to: determine a pseudo-random sequence based on the first RNTI, and descramble the data by using the pseudo-random sequence. Alternatively, the descrambling module 802 may be specifically configured to: descramble the data, to obtain descrambled data; perform inverse processing of rate matching on the descrambled data, to obtain data that exits before the rate matching; perform de-redundancy processing on the data that exits before the rate matching, to obtain de-redundant data; descramble a check bit of the de-redundant data by using the first RNTI, to obtain check coded data; and perform inverse processing of cyclic redundancy check CRC coding on the check coded data. Alternatively, the descrambling module 802 may be specifically configured to: determine a pseudo-random sequence based on the first RNTI; descramble the data by using the pseudo-random sequence, to obtain descrambled data; perform inverse processing of rate matching on the descrambled data, to obtain data that exits before the rate matching; perform de-redundancy processing on the data that exits before the rate matching, to obtain de-redundant data; descramble a check bit of the de-redundant data by using the first RNTI, to obtain check coded data; and perform inverse processing of cyclic redundancy check CRC coding on the check coded data.

In a specific implementation, when descrambling the check bit of the de-redundant data by using the first RNTI, the descrambling module 802 may be specifically configured to perform an exclusive OR operation on the first RNTI and the check bit of the de-redundant data.

In the implementations of this application, division of modules is an example, and is merely logical function division. In an actual implementation, there may be another division manner. In addition, function modules in the implementations of this application may be integrated into one processor, or each of the modules may exist alone physically, or two or more modules may be integrated into one module. The integrated module may be implemented in a form of hardware, or may be implemented in a form of a software function module.

When the integrated module is implemented in the form of hardware, as shown in FIG. 9, a base station may include a processor 902. Physical hardware corresponding to the foregoing module may be the processor 902. The processor 902 may be a CPU, a digital processing module, or the like. The base station may further include a transceiver 901. The processor 902 performs data receiving and sending with a terminal device by using the transceiver 901. The apparatus further includes a memory 903, configured to store a program executed by the processor 902. The memory 903 may be a nonvolatile memory, for example, an HDD or an SSD, or may be a volatile memory, for example, an RAM. The memory 903 is any other medium that can be configured to carry or store expected program code that has an instruction or a data structure form and that can be accessed by a computer, but is not limited thereto.

The processor 902 is configured to execute the program code stored in the memory 903, and is specifically configured to perform any method in the implementation shown in FIG. 3 to FIG. 5. For details, refer to the method in the implementation shown in FIG. 3 to FIG. 5. Details are not described herein again in this application.

In this implementation of this application, a specific connection medium among the foregoing transceiver 901, processor 902, and memory 903 is not limited. In this implementation of this application, the memory 903, the processor 902, and the transceiver 901 are connected to each other by using a bus 904 in FIG. 9. The bus is represented by using a thick line in FIG. 9, and a connection manner between other components is merely described as an example, and is not limited thereto. The bus may be classified into an address bus, a data bus, a control bus, and the like. For ease of representation, only one thick line is used to represent the bus in FIG. 9, but this does not mean that there is only one bus or only one type of bus.

An implementation of the present disclosure further provides a chip. The chip includes the foregoing transceiver and the foregoing processor, and is configured to support a first relay device in implementing any method in the implementation shown in FIG. 3 to FIG. 5.

An implementation of this application further provides a computer-readable storage medium, configured to store a computer software instruction that needs to be executed for executing the foregoing processor. The computer-readable storage medium includes a program that needs to be executed for executing the foregoing processor.

Persons skilled in the art should understand that the implementations of this application may be provided as a method, a system, or a computer program product. Therefore, this application may use a form of hardware only implementations, software only implementations, or implementations with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the implementations of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

The scope of protection shall be defined by the appended claims.

**Claims**

1.  A channel transmission method, comprising:

    when operating in a non-scheduling transmission mode,
    scrambling (S301), by a terminal device, to-be-sent data by using a first radio network temporary identifier RNTI, wherein a correspondence exists between the first RNTI and a specified frequency domain resource index, wherein the specified frequency domain resource index corresponds to a frequency domain resource allocated to the terminal for uplink transmission in the non-scheduling transmission mode; and
    determining, by the terminal device, the first RNTI based on the specified frequency domain resource index; and
    when operating in a scheduling transmission mode,
    scrambling (S302), by the terminal device, the to-be-sent data by using a second RNTI, wherein the second RNTI is different from the first RNTI.

2.  The method according to claim 1, wherein the determining, by the terminal device, the first RNTI based on the specified frequency domain resource index comprises:
    performing, by the terminal device, a modulo operation on the specified frequency domain resource index to obtain the first RNTI.

3.  The method according to claim 1 or 2, wherein the scrambling, by a terminal device, to-be-sent data by using a first RNTI comprises:

    performing, by the terminal device, cyclic redundancy check CRC coding on the to-be-sent data, to obtain check coded data;
    performing, by the terminal device, redundancy information expansion processing on the check coded data, to obtain error-correction coded data;
    performing, by the terminal device, rate matching on the error-correction coded data, to obtain rate-matched data;
    determining, by the terminal device, a pseudo-random sequence based on the first RNTI; and
    scrambling, by the terminal device, the rate-matched data by using the pseudo-random sequence.

4.  The method according to claim 1 or 2, wherein the scrambling, by a terminal device, to-be-sent data by using a first RNTI comprises:

    performing, by the terminal device, cyclic redundancy check CRC coding on the to-be-sent data, to obtain check coded data; and
    scrambling, by the terminal device, a check bit of the check coded data by using the first RNTI.

5.  The method according to claim 1 or 2, wherein the scrambling, by a terminal device, to-be-sent data by using a first RNTI comprises:

    performing, by the terminal device, cyclic redundancy check CRC coding on the to-be-sent data, to obtain check coded data;
    scrambling, by the terminal device, a check bit of the check coded data by using the first RNTI, to obtain scrambled check coded data;
    performing, by the terminal device, redundancy information expansion processing on the scrambled check coded data, to obtain error-correction coded data;

performing, by the terminal device, rate matching on the error-correction coded data, to obtain rate-matched data;
determining, by the terminal device, a pseudo-random sequence based on the first RNTI; and
scrambling, by the terminal device, the rate-matched data by using the pseudo-random sequence.

6. The method according to claim 4 or 5, wherein the scrambling, by the terminal device, a check bit of the check coded data by using the first RNTI comprises:
performing, by the terminal device, an exclusive OR operation on the first RNTI and the check bit of the check coded data.

7. A channel transmission method, comprising:

receiving (S304), by a base station, data sent by a terminal device; and
when operating in a non-scheduling transmission mode,
descrambling (S305), by the base station, the data by using a first radio network temporary identifier RNTI,
wherein a correspondence exists between the first RNTI and a specified frequency domain resource index,
wherein the specified frequency domain resource index corresponds to a frequency domain resource allocated to the terminal for uplink transmission in the non-scheduling transmission mode; and
determining, by the base station, the first RNTI based on the specified frequency domain resource index; and
when operating in a scheduling transmission mode,
descrambling (S306), by the base station, the data by using a second RNTI, wherein the second RNTI is different from the first RNTI.

8. The method according to claim 7, wherein the determining, by the base station, the first RNTI based on the specified frequency domain resource index comprises:
performing, by the base station, a modulo operation on the specified frequency domain resource index, to obtain the first RNTI.

9. The method according to claim 7 or 8, wherein the descrambling, by the base station, the data by using a first RNTI comprises:

determining, by the base station, a pseudo-random sequence based on the first RNTI; and
descrambling, by the base station, the data by using the pseudo-random sequence.

10. The method according to claim 7 or 8, wherein the descrambling, by the base station, the data by using a first RNTI comprises:

descrambling, by the base station, the data, to obtain descrambled data;
performing, by the base station, inverse processing of rate matching on the descrambled data, to obtain data that exists before the rate matching;
performing, by the base station, de-redundancy processing on the data that exists before the rate matching, to obtain de-redundant data;
descrambling, by the base station, a check bit of the de-redundant data by using the first RNTI, to obtain check coded data; and
performing, by the base station, inverse processing of cyclic redundancy check CRC coding on the check coded data.

11. The method according to claim 7 or 8, wherein the descrambling, by the base station, the data by using a first RNTI comprises:

determining, by the base station, a pseudo-random sequence based on the first RNTI;
descrambling, by the base station, the data by using the pseudo-random sequence, to obtain descrambled data;
performing, by the base station, inverse processing of rate matching on the descrambled data, to obtain data that exists before the rate matching;
performing, by the base station, de-redundancy processing on the data that exists before the rate matching, to obtain de-redundant data;
descrambling, by the base station, a check bit of the de-redundant data by using the first RNTI, to obtain check coded data; and
performing, by the base station, inverse processing of cyclic redundancy check CRC coding on the check coded data.

**12.** The method according to claim 10 or 11, wherein the descrambling, by the base station, a check bit of the de-redundant data by using the first RNTI comprises:

performing, by the base station, an exclusive OR operation on the first RNTI and the check bit of the de-redundant data.

**13.** A terminal device comprising means configured to perform the method of according to any one of claims 1 to 6.

**14.** A base station comprising means configured to perform the method of according to any one of claims 7 to 12.

**15.** A computer-readable storage medium, wherein the computer-readable storage medium stores:

a first set of instructions which when executed by a terminal device causes the terminal device to perform the method according to any one of claims 1 to 6 ; or

a second set of instructions which when executed by a base station causes the base station to perform the method according to any one of claims 7 to 12.


**Patentansprüche**

**1.** Kanalübertragungsverfahren, umfassend:

beim Betrieb in einem Übertragungsmodus ohne Zeitplanung,
Verwürfeln (S301), durch ein Endgerät, von zu sendenden Daten unter Verwendung eines ersten "Radio Network Temporary Identifier", RNTI,
wobei eine Entsprechung zwischen dem ersten RNTI und einem spezifizierten Frequenzdomänenressourcenindex besteht, wobei der spezifizierte Frequenzdomänenressourcenindex einer Frequenzdomänenressource entspricht, die dem Endgerät für Uplink-Übertragung im Übertragungsmodus ohne Zeitplanung zugewiesen ist; und
Bestimmen, durch das Endgerät, des ersten RNTI auf der Grundlage des spezifizierten Frequenzdomänenressourcenindex; und
beim Betrieb in einem Übertragungsmodus mit Zeitplanung,
Verwürfeln (S302), durch das Endgerät, der zu sendenden Daten unter Verwendung eines zweiten RNTI, wobei sich der zweite RNTI vom ersten RNTI unterscheidet.

**2.** Verfahren nach Anspruch 1, wobei das Bestimmen, durch das Endgerät, des ersten RNTI auf der Grundlage des spezifizierten Frequenzdomänenressourcenindex umfasst:
Durchführen, durch das Endgerät, einer Modulo-Operation auf dem spezifizierten Frequenzdomänenressourcenindex zum Erhalten des ersten RNTI.

**3.** Verfahren nach Anspruch 1 oder 2, wobei das Verwürfeln, durch ein Endgerät, von zu sendenden Daten unter Verwendung eines ersten RNTI Folgendes umfasst:

Durchführen, durch das Endgerät, von "Cyclic Redundancy Check"-, CRC-, Codierung auf den zu sendenden Daten zum Erhalten von prüfcodierten Daten;
Durchführen, durch das Endgerät, von Redundanzinformationsexpansionsverarbeitung auf den prüfcodierten Daten zum Erhalten von fehlerkorrekturcodierten Daten;
Durchführen, durch das Endgerät, von Ratenanpassung auf den fehlerkorrekturcodierten Daten zum Erhalten von ratenangepassten Daten;
Bestimmen, durch das Endgerät, einer Pseudozufallsfolge auf der Grundlage des ersten RNTI; und
Verwürfeln, durch das Endgerät, der ratenangepassten Daten unter Verwendung der Pseudozufallsfolge.

**4.** Verfahren nach Anspruch 1 oder 2, wobei das Verwürfeln, durch ein Endgerät, von zu sendenden Daten unter Verwendung eines ersten RNTI umfasst:

Durchführen, durch das Endgerät, von "Cyclic Redundancy Check"-, CRC-, Codierung auf den zu sendenden Daten zum Erhalten von prüfcodierten Daten; und
Verwürfeln, durch das Endgerät, eines Prüfbits der prüfcodierten Daten unter Verwendung des ersten RNTI.

**5.** Verfahren nach Anspruch 1 oder 2, wobei das Verwürfeln, durch ein Endgerät, von zu sendenden Daten unter Verwendung eines ersten RNTI Folgendes umfasst:

Durchführen, durch das Endgerät, von "Cyclic Redundancy Check"-, CRC-, Codierung auf den zu sendenden Daten zum Erhalten von prüfcodierten Daten;
Verwürfeln, durch das Endgerät, eines Prüfbits der prüfcodierten Daten unter Verwendung des ersten RNTI zum Erhalten von verwürfelten prüfcodierten Daten.
Durchführen, durch das Endgerät, von Redundanzinformationsexpansionsverarbeitung auf den verwürfelten prüfcodierten Daten zum Erhalten von fehlerkorrekturcodierten Daten;
Durchführen, durch das Endgerät, von Ratenanpassung auf den fehlerkorrekturcodierten Daten zum Erhalten von ratenangepassten Daten;
Bestimmen, durch das Endgerät, einer Pseudozufallsfolge auf der Grundlage des ersten RNTI; und
Verwürfeln, durch das Endgerät, der ratenangepassten Daten unter Verwendung der Pseudozufallsfolge.

**6.** Verfahren nach Anspruch 4 oder 5, wobei das Verwürfeln, durch das Endgerät, eines Prüfbits der prüfcodierten Daten unter Verwendung des ersten RNTI umfasst:
Durchführen, durch das Endgerät, einer Exklusiv-ODER-Operation auf dem ersten RNTI und dem Prüfbit der prüfcodierten Daten.

**7.** Kanalübertragungsverfahren, umfassend:

Empfangen (S304), durch eine Basisstation, von Daten, die von einem Endgerät gesendet werden; und
beim Betrieb in einem Übertragungsmodus ohne Zeitplanung,
Entwürfeln (S305), durch die Basisstation, der Daten unter Verwendung eines ersten "Radio Network Temporary Identifier", RNTI,
wobei eine Entsprechung zwischen dem ersten RNTI und einem spezifizierten Frequenzdomänenressourcenindex besteht, wobei der spezifizierte Frequenzdomänenressourcenindex einer Frequenzdomänenressource entspricht, die dem Endgerät für Uplink-Übertragung im Übertragungsmodus ohne Zeitplanung zugewiesen ist; und
Bestimmen, durch die Basisstation, des ersten RNTI auf der Grundlage des spezifizierten Frequenzdomänenressourcenindex; und
beim Betrieb in einem Übertragungsmodus mit Zeitplanung,
Entwürfeln (S306), durch die Basisstation, der Daten unter Verwendung eines zweiten RNTI, wobei sich der zweite RNTI vom ersten RNTI unterscheidet.

**8.** Verfahren nach Anspruch 7, wobei das Bestimmen, durch die Basisstation, des ersten RNTI auf der Grundlage des spezifizierten Frequenzdomänenressourcenindex umfasst:
Durchführen, durch die Basisstation, einer Modulo-Operation auf dem spezifizierten Frequenzdomänenressourcenindex zum Erhalten des ersten RNTI.

**9.** Verfahren nach Anspruch 7 oder 8, wobei das Entwürfeln, durch die Basisstation, der Daten unter Verwendung eines ersten RNTI umfasst:

Bestimmen, durch die Basisstation, einer Pseudozufallsfolge auf der Grundlage des ersten RNTI; und
Entwürfeln, durch die Basisstation, der Daten unter Verwendung der Pseudozufallsfolge.

**10.** Verfahren nach Anspruch 7 oder 8, wobei das Entwürfeln, durch die Basisstation, der Daten unter Verwendung eines ersten RNTI Folgendes umfasst:

Entwürfeln, durch die Basisstation, der Daten zum Erhalten entwürfelter Daten;
Durchführen, durch die Basisstation, von Ratenanpassungsinversverarbeitung auf den entwürfelten Daten zum Erhalten von Daten, die vor der Ratenanpassung vorhanden sind;
Durchführen, durch die Basisstation, von Redundanzreduzierungsverarbeitung auf den Daten, die vor der Ratenanpassung vorhanden sind, zum Erhalten von redundanzreduzierten Daten;
Entwürfeln, durch die Basisstation, eines Prüfbits der redundanzreduzierten Daten unter Verwendung des ersten RNTI zum Erhalten von prüfcodierten Daten; und
Durchführen, durch die Basisstation, von Inversverarbeitung von "Cyclic Redundancy Check"-, CRC-, Codierung auf den prüfcodierten Daten.

11. Verfahren nach Anspruch 7 oder 8, wobei das Entwürfeln, durch die Basisstation, der Daten unter Verwendung eines ersten RNTI Folgendes umfasst:

Bestimmen, durch die Basisstation, einer Pseudozufallsfolge auf der Grundlage des ersten RNTI;
Entwürfeln, durch die Basisstation, der Daten unter Verwendung der Pseudozufallsfolge zum Erhalten von entwürfelten Daten;
Durchführen, durch die Basisstation, von Ratenanpassungsinversverarbeitung auf den entwürfelten Daten zum Erhalten von Daten, die vor der Ratenanpassung vorhanden sind;
Durchführen, durch die Basisstation, von Redundanzreduzierungsverarbeitung auf den Daten, die vor der Ratenanpassung vorhanden sind, zum Erhalten von redundanzreduzierten Daten;
Entwürfeln, durch die Basisstation, eines Prüfbits der redundanzreduzierten Daten unter Verwendung des ersten RNTI zum Erhalten von prüfcodierten Daten; und
Durchführen, durch die Basisstation, von Inversverarbeitung von "Cyclic Redundancy Check"-, CRC-, Codierung auf den prüfcodierten Daten.

12. Verfahren nach Anspruch 10 oder 11, wobei das Entwürfeln, durch die Basisstation, eines Prüfbits der redundanzreduzierten Daten unter Verwendung des ersten RNTI umfasst:
Durchführen, durch die Basisstation, einer Exklusiv-ODER-Operation auf dem ersten RNTI und dem Prüfbit der redundanzreduzierten Daten.

13. Endgerät, umfassend Mittel, die dafür ausgelegt sind, das Verfahren nach einem der Ansprüche 1 bis 6 durchzuführen.

14. Basisstation, umfassend Mittel, die dafür ausgelegt sind, das Verfahren nach einem der Ansprüche 7 bis 12 durchzuführen.

15. Computerlesbares Speichermedium, wobei das computerlesbare Speichermedium folgende Elemente speichert:

einen ersten Satz von Anweisungen, die bei ihrer Ausführung durch ein Endgerät das Endgerät veranlassen, das Verfahren nach einem der Ansprüche 1 bis 6 durchzuführen; oder
einen zweiten Satz von Anweisungen, die bei ihrer Ausführung durch eine Basisstation die Basisstation veranlassen, das Verfahren nach einem der Ansprüche 7 bis 12 durchzuführen.

**Revendications**

1. Procédé de transmission de canal, comprenant :

lors du fonctionnement dans un mode de transmission de non planification,
brouiller (S301), par un dispositif terminal, des données à envoyer en utilisant un premier identifiant temporaire de réseau radio RNTI,
dans lequel une correspondance existe entre le premier RNTI et un indice de ressources de domaine de fréquence spécifié, dans lequel l'indice de ressources de domaine de fréquence spécifié correspond à une ressource de domaine de fréquence allouée au terminal pour une transmission en liaison montante dans le mode de transmission de non planification ; et
déterminer, par le dispositif terminal, le premier RNTI basé sur l'indice de ressources de domaine de fréquence spécifié ; et
lors du fonctionnement dans un mode de transmission de planification,
brouiller (S302), par le dispositif terminal, les données à envoyer en utilisant un deuxième RNTI, dans lequel le deuxième RNTI est différent du premier RNTI.

2. Procédé selon la revendication 1, dans lequel la détermination, par le dispositif terminal, du premier RNTI basé sur l'indice de ressources de domaine de fréquence spécifié comprend :
l'exécution, par le dispositif terminal, d'une opération module sur l'indice de ressources de domaine de fréquence spécifié pour obtenir le premier RNTI.

3. Procédé selon la revendication 1 ou 2, dans lequel le brouillage, par un dispositif terminal, de données à envoyer en utilisant un premier RNTI comprend :

l'exécution, par le dispositif terminal, d'un codage de vérification de redondance cyclique CRC sur les données à envoyer, pour obtenir des données codées de vérification ;

l'exécution, par le dispositif terminal, d'un traitement d'expansion d'informations de redondance sur les données codées de vérification, pour obtenir des données codées de correction d'erreur ;

l'exécution, par le dispositif terminal, d'une correspondance de débit sur les données codées de correction d'erreur, pour obtenir des données mises en correspondance de débit ;

la détermination, par le dispositif terminal, d'une séquence pseudo-aléatoire basée sur le premier RNTI ; et

le brouillage, par le dispositif terminal, des données mises en correspondance de débit en utilisant la séquence pseudo-aléatoire.

4. Procédé selon la revendication 1 ou 2, dans lequel le brouillage, par un dispositif terminal, de données à envoyer en utilisant un premier RNTI comprend :

l'exécution, par le dispositif terminal, d'un codage de vérification de redondance cyclique CRC sur les données à envoyer, pour obtenir des données codées de vérification ; et

le brouillage, par le dispositif terminal, d'un bit de vérification des données codées de vérification en utilisant le premier RNTI.

5. Procédé selon la revendication 1 ou 2, dans lequel le brouillage, par un dispositif terminal, de données à envoyer en utilisant un premier RNTI comprend :

l'exécution, par le dispositif terminal, d'un codage de vérification de redondance cyclique CRC sur les données à envoyer, pour obtenir des données codées de vérification ;

le brouillage, par le dispositif terminal, d'un bit de vérification des données codées de vérification en utilisant le premier RNTI, pour obtenir des données codées de vérification brouillées ;

l'exécution, par le dispositif terminal, d'un traitement d'expansion d'informations de redondance sur les données codées de vérification brouillées, pour obtenir des données codées de correction d'erreur ;

l'exécution, par le dispositif terminal, d'une correspondance de débit sur les données codées de correction d'erreur, pour obtenir des données mises en correspondance de débit ;

la détermination, par le dispositif terminal, d'une séquence pseudo-aléatoire basée sur le premier RNTI ; et

le brouillage, par le dispositif terminal, des données mises en correspondance de débit en utilisant la séquence pseudo-aléatoire.

6. Procédé selon la revendication 4 ou 5, dans lequel le brouillage, par le dispositif terminal, d'un bit de vérification des données codées de vérification en utilisant le premier RNTI comprend :
l'exécution, par le dispositif terminal, d'une opération OU exclusif sur le premier RNTI et le bit de vérification des données codées de vérification.

7. Procédé de transmission de canal, comprenant :

recevoir (S304), par une station de base, des données envoyées par un dispositif terminal ; et
lors du fonctionnement dans un mode de transmission de non planification,
désembrouiller (S305), par la station de base, les données en utilisant un premier identifiant temporaire de réseau radio RNTI,
dans lequel une correspondance existe entre le premier RNTI et un indice de ressources de domaine de fréquence spécifié, dans lequel l'indice de ressources de domaine de fréquence spécifié correspond à une ressource de domaine de fréquence allouée au terminal pour une transmission en liaison montante dans le mode de transmission de non planification ; et
déterminer, par la station de base, le premier RNTI basé sur l'indice de ressources de domaine de fréquence spécifié ; et
lors du fonctionnement dans un mode de transmission de planification,
désembrouiller (S306), par la station de base, les données en utilisant un deuxième RNTI, dans lequel le deuxième RNTI est différent du premier RNTI.

8. Procédé selon la revendication 7, dans lequel la détermination, par la station de base, du premier RNTI basé sur l'indice de ressources de domaine de fréquence spécifié comprend :
l'exécution, par la station de base, d'une opération module sur l'indice de ressources de domaine de fréquence spécifié, pour obtenir le premier RNTI.

**9.** Procédé selon la revendication 7 ou 8, dans lequel le désembrouillage, par la station de base, des données en utilisant un premier RNTI comprend :

la détermination, par la station de base, d'une séquence pseudo-aléatoire basée sur le premier RNTI ; et
le désembrouillage, par la station de base, des données en utilisant la séquence pseudo-aléatoire.

**10.** Procédé selon la revendication 7 ou 8, dans lequel le désembrouillage, par la station de base, des données en utilisant un premier RNTI comprend :

le désembrouillage, par la station de base, des données, pour obtenir des données désembrouillées ;
l'exécution, par la station de base, d'un traitement inverse de correspondance de débit sur les données désembrouillées, pour obtenir des données qui existent avant la correspondance de débit ;
l'exécution, par la station de base, d'un traitement de dé-redondance sur les données qui existent avant la correspondance de débit, pour obtenir des données dé-redondantes ;
le désembrouillage, par la station de base, d'un bit de vérification des données dé-redondantes en utilisant le premier RNTI, pour obtenir des données codées de vérification ; et
l'exécution, par la station de base, d'un traitement inverse de codage de vérification de redondance cyclique CRC sur les données codées de vérification.

**11.** Procédé selon la revendication 7 ou 8, dans lequel le désembrouillage, par la station de base, des données en utilisant un premier RNTI comprend :

la détermination, par la station de base, d'une séquence pseudo-aléatoire basée sur le premier RNTI ;
le désembrouillage, par la station de base, des données en utilisant la séquence pseudo-aléatoire, pour obtenir des données désembrouillées ;
l'exécution, par la station de base, d'un traitement inverse de correspondance de débit sur les données désembrouillées, pour obtenir des données qui existent avant la correspondance de débit ;
l'exécution, par la station de base, d'un traitement de dé-redondance sur les données qui existent avant la correspondance de débit, pour obtenir des données dé-redondantes ;
le désembrouillage, par la station de base, d'un bit de vérification des données dé-redondantes en utilisant le premier RNTI, pour obtenir des données codées de vérification ; et
l'exécution, par la station de base, d'un traitement inverse de codage de vérification de redondance cyclique CRC sur les données codées de vérification.

**12.** Procédé selon la revendication 10 ou 11, dans lequel le désembrouillage, par la station de base, d'un bit de vérification des données dé-redondantes en utilisant le premier RNTI comprend :
l'exécution, par la station de base, d'une opération OU exclusif sur le premier RNTI et le bit de vérification des données dé-redondantes.

**13.** Dispositif terminal comprenant des moyens configurés pour mettre en oeuvre le procédé selon l'une quelconque des revendications 1 à 6.

**14.** Station de base comprenant des moyens configurés pour mettre en oeuvre le procédé selon l'une quelconque des revendications 7 à 12.

**15.** Support de stockage lisible par ordinateur, le support de stockage lisible par ordinateur stockant :

un premier ensemble d'instructions qui, lorsqu'il est exécuté par un dispositif terminal, amène le dispositif terminal à mettre en oeuvre le procédé selon l'une quelconque des revendications 1 à 6 ; ou
un deuxième ensemble d'instructions qui, lorsqu'il est exécuté par une station de base, amène la station de base à mettre en oeuvre le procédé selon l'une quelconque des revendications 7 à 12.

Terminal device

Base station

EPC

FIG. 1

```
                                    ┌──── S201
┌──────────────────────────────────────────────────────────┐
│  A terminal device performs check coding on to-be-sent     │
│  data, to obtain a check coded codeword                    │
└──────────────────────────────────────────────────────────┘
                            │       ┌──── S202
                            ▼
┌──────────────────────────────────────────────────────────┐
│  The terminal device performs redundancy information       │
│  expansion processing on TB CRC, to obtain error-          │
│  correction coded data                                     │
└──────────────────────────────────────────────────────────┘
                            │       ┌──── S203
                            ▼
┌──────────────────────────────────────────────────────────┐
│  The terminal device performs rate matching on the         │
│  error-correction coded data, to obtain rate-matched data  │
└──────────────────────────────────────────────────────────┘
                            │       ┌──── S204
                            ▼
┌──────────────────────────────────────────────────────────┐
│  The terminal device scrambles the rate-matched data, to   │
│  obtain scrambled data                                     │
└──────────────────────────────────────────────────────────┘
                            │       ┌──── S205
                            ▼
┌──────────────────────────────────────────────────────────┐
│  The terminal device modulates the scrambled data based    │
│  on a modulation and coding scheme corresponding to an     │
│  MCS index, to obtain modulated data                       │
└──────────────────────────────────────────────────────────┘
                            │       ┌──── S206
                            ▼
┌──────────────────────────────────────────────────────────┐
│  The terminal device performs inverse fast Fourier         │
│  transform on the modulated data, to obtain IFFT data      │
└──────────────────────────────────────────────────────────┘
                            │       ┌──── S207
                            ▼
┌──────────────────────────────────────────────────────────┐
│  The terminal device adds a cyclic prefix to the IFFT data │
└──────────────────────────────────────────────────────────┘
```

FIG. 2

```
┌─────────────────────┐                              ┌─────────────────────┐
│   Terminal device   │                              │    Base station     │
└──────────┬──────────┘                              └──────────┬──────────┘
           │                                                    │
┌──────────┴─────────────────────┐                             │
│ Scheduling transmission: S301:  │                             │
│ Scramble to-be-sent data by using a │                         │
│           second RNTI           │                             │
│ Non-scheduling transmission mode: │                           │
│ S302: Scramble the to-be-sent data │                          │
│      by using a first RNTI       │                            │
└──────────┬─────────────────────┘                             │
           │                                                    │
           │     S303: Scrambled to-be-sent data               │
           ├───────────────────────────────────────────────────►
           │                                                    │
           │                          ┌─────────────────────────┴──────┐
           │                          │ S304: Receive data sent by the │
           │                          │        terminal device         │
           │                          └─────────────────────────┬──────┘
           │                          ┌─────────────────────────┴──────┐
           │                          │ Scheduling transmission: S305: │
           │                          │ Descramble the data by using the │
           │                          │          second RNTI           │
           │                          │ Non-scheduling transmission mode: │
           │                          │ S306: Descramble the to-be-sent │
           │                          │   data by using the first RNTI │
           │                          └─────────────────────────┬──────┘
           │                                                    │
```

FIG. 3

| MAC header | MAC control information unit 1 | MAC control information unit 1 | MAC service data unit SDU | ... | MAC SDU | MAC SDU |
|---|---|---|---|---|---|---|

FIG. 4

S501

A base station removes a CP of the data, to obtain data without the CP

S502

The base station performs fast Fourier transform on the data without the CP, to obtain FFT data

S503

The base station demodulates the FFT data based on a modulation and coding scheme corresponding to an MCS index, to obtain demodulated data

S504

The base station descrambles the demodulated data, to obtain descrambled data

S505

The base station performs inverse processing of rate matching on the descrambling data, to obtain data that exists before the rate matching

S506

The base station performs de-redundancy processing on the data that exists before the rate matching, to obtain de-redundant data

S507

The base station performs inverse check coding on the de-redundant data, to obtain original data

FIG. 5

Terminal device

602

Determining module

601

Scrambling module

FIG. 6

Terminal device

701

Transceiver

702

Processor

704

703

Memory

FIG. 7

Base station

Receiving module — 801

Determining module — 803

Descrambling module — 802

FIG. 8

Base station

Transceiver — 901

Processor — 902

— 904

Memory — 903

FIG. 9

# EP 3 720 161 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMSUNG.** Procedure for UL Transmissions without Grant. *3GPP DRAFT; R1-1716013, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 17 September 2017, vol. RAN WG1 (Nagoya, http://www.3gpp.org/ftp/Meetings_3GPP_SYNC/RAN1/Docs

- **HUAWEI et al.** Further discussion on the modelling of grant-free. *3GPP DRAFT; R2-1711962, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 09 October 2017, vol. RAN WG2 (Prague, http://www.3gpp.org/ftp/tsg_ran/WG2_RL2/TSGR2_99bis/Docs